(19) Europäisches Patentamt
European Patent Office
Office européen des brevets

(11) Publication number: 0 134 593
B1

(12) # EUROPEAN PATENT SPECIFICATION

(45) Date of publication of patent specification: **05.08.87**

(51) Int. Cl.4: **C 01 B 17/04,** B 01 D 53/36, B 01 J 21/08

(21) Application number: **84200719.7**

(22) Date of filing: **16.05.84**

(54) **Process for the production of elemental sulphur.**

(30) Priority: **04.07.83 GB 8318099**

(43) Date of publication of application:
**20.03.85 Bulletin 85/12**

(45) Publication of the grant of the patent:
**05.08.87 Bulletin 87/32**

(84) Designated Contracting States:
**BE DE FR IT NL SE**

(56) References cited:
**EP-A-0 039 266**
**EP-A-0 060 742**
**EP-A-0 067 459**
**DE-A-2 021 111**
**FR-A-2 481 254**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Groenendaal, Willem**
**Shell Centre**
**London SE1 7NA (GB)**
Inventor: **Van Grinsven, Petrus Franciscus Antonius**
**Badhuisweg 3**
**NL-1031 CM Amsterdam (NL)**
Inventor: **Meeboer, Bob**
**Badhuisweg 3**
**NL-1031 CM Amsterdam (NL)**

(74) Representative: **Aalbers, Onno et al**
**P.O. Box 302**
**NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 134 593 B1

**Description**

The invention relates to a process for the production of elemental sulphur from a gas containing hydrogen sulphide ($H_2S$) and sulphur dioxide ($SO_2$).

$H_2S$-containing gases become available, for example, in oil refineries and from processing coke-oven gas. Natural gas may also contain $H_2S$. $H_2S$ may be removed from $H_2S$-containing gases by absorption in a regenerable absorbent. Subsequent regeneration of the absorbent yields a gas having a much higher $H_2S$ content than the $H_2S$-containing starting gas and usually also containing carbon dioxide ($CO_2$). The $H_2S$-containing gases obtained by this regeneration are usually fed to a Claus-type process for the production of elemental sulphur. "Elemental sulphur" is hereinafter also referred to as "sulphur".

In a first version of the Claus-type process an $H_2S$-containing gas is partially combusted with a free oxygen-containing gas in a furnace referred to herein as "thermal zone". In the thermal zone the following reaction takes place with regard to sulphur formation:

$$6\ H_2S+3\ O_2 \leftrightharpoons \frac{6}{x} S_x+6\ H_2O \quad (1)$$

which can be considered as occurring in two steps:

$$2\ H_2S+3\ O_2 \leftrightharpoons 2\ SO_2+2\ H_2O \quad (2)$$

$$4\ H_2S+2SO_2 \leftrightharpoons \frac{6}{x} S_x+4\ H_2O \quad (3)$$

In the thermal zone the $H_2S$ is converted to sulphur in accordance with reaction (1), the quantity of free oxygen-containing gas being such that only one third of all $H_2S$ can be oxidized to $SO_2$ in accordance with reaction (2). The effluent gas from the thermal zone contains $H_2S$, $SO_2$, sulphur vapour, nitrogen, water vapour and usually also $CO_2$, carbon monoxide (CO), carbonyl sulphide (COS), carbon disulphide ($CS_2$) and hydrogen.

The effluent gas from the thermal zone has a temperature usually in the range of from 600°C to 1650°C and is cooled to condense most of the sulphur vapour present, to a temperature suitably in the range of from 120°C to 200°C. Thus, sulphur is recovered as a valuable product. The gases are then re-heated, to a temperature usually in the range of from 230°C to 280°C and introduced into a first catalytic zone where $H_2S$ reacts with $SO_2$ to produce more sulphur in accordance with reaction (3). The effluent from the first catalytic zone is cooled to condense sulphur. The gas stream freed from sulphur is re-heated, to a temperature usually in the range of from 200°C to 280°C and introduced into a second catalytic zone to produce more sulphur. The second catalytic zone may be followed by a third and, if desired, the third by a fourth catalytic zone to produce still more sulphur at a temperature usually in the range of from 200°C to 280°C.

Only gases containing much $H_2S$—more than, for example, 40% by volume—can be readily combusted in the thermal zone in accordance with reaction (1). Gases containing less $H_2S$—between, for example, 20 and 40% by volume—can be processed according to a second version of the Claus-type process.

In the second version the $H_2S$-containing gas is split into a first portion representing at least one third and not more than two thirds of the total $H_2S$-containing gas and a second portion containing the balance of the total $H_2S$-containing gas. The first portion is combusted with a free oxygen-containing gas in an amount stoichiometric with respect to oxidation of one third of the total amount of $H_2S$ according to reaction (2), thus forming a limited amount of sulphur.

The effluent gas from the thermal zone is cooled to condense the major part of the sulphur formed and then introduced, in admixture with the said second portion of the $H_2S$-containing gas, into a first catalytic zone from where the operation is continued as described for the first version.

The remaining gases as obtained after condensation of sulphur from the gases leaving the final catalytic zone in which reaction (3) is carried out are also referred to herein as "Claus tail gases". These gases contain nitrogen, water vapour, some $H_2S$ and $SO_2$ and usually also $CO_2$, CO, COS, $CS_2$ and hydrogen. $H_2S$ and $SO_2$ are present because of the position of the equilibrium of reaction (3) at the temperature maintained in the final catalytic zone referred to hereinbefore. COS and $CS_2$ are present because at least part thereof has been formed in the thermal zone and they have only partly been converted in the catalytic zone or zones mentioned hereinbefore. This conversion involves a hydrolysis according to the reactions

$$COS+H_2O \leftrightharpoons CO_2+H_2S \quad (4)$$

and

$$CS_2+2\ H_2O \leftrightharpoons CO_2+2\ H_2S \quad (5)$$

Various catalysts for reactions (3), (4) and (5) have been described in prior publications. For example, European patent application No. 0038741 describes a catalyst substantially consisting of titanium oxide.

It is an object of the present invention to catalyze reactions (3), (4) and (5) more effectively than hitherto has been the case.

Accordingly, the invention provides a process for the production of elemental sulphur from a gas containing hydrogen sulphide and sulphur dioxide, which process comprises contacting the said gas with a catalyst composition comprising at least one metal from Group 3b and/or Group 4b of the Periodic Table of the Elements on a silica-containing carrier.

The Periodic Table of the Elements referred to herein is shown on the inside cover of "Handbook of Chemistry and Physics", 63rd edition (1982—1983). The Group 3b metals mentioned hereinbefore are scandium, yttrium, thorium and the lanthanides, i.e. lanthanum, cerium, praseodymium, neodymium, promethium, samarium, europium, gadolinium, terbium, dysprosium, holmium, erbium, thulium, ytterbium and lutetium. The Group 4b metals are titanium, zirconium and hafnium. Preferably, the metal from Group 3b and/or Group 4b of the Periodic Table of the Elements is applied as an oxide or sulphate thereof. Most preferably, at least one oxide of titanium, zirconium and/or thorium is applied on the carrier. These oxides are themselves active catalysts or are converted to active catalysts in contact with the starting gas. Very good results have been obtained with titanium dioxide and zirconium dioxide.

The metals from Group 3b and/or Group 4b are applied in an atomic ratio of metals to silicon which can be varied. As a rule, atomic ratios of metal to silicon in the range of from 0.001 to 1.0 are preferred, atomic ratios in the range of from 0.03 to 0.3 being particularly preferred.

Suitably, at least 50% by weight of silica is applied in the silica-containing carrier. Preferably, at least 75% and, most preferably, at least 90% by weight of silica is applied in the carrier. Among the synthetic silica's commercially available those containing at least 98.0% by weight of silica are generally the most suitable.

According to a very attractive embodiment of the present invention a silica is used which has been prepared by the following process steps:—

step a) preparing a silica hydrosol by mixing an aqueous solution of an alkali metal silicate with an aqueous solution of an acid;

step b) converting the hydrosol into droplet form;

step c) shaping the droplets in air or in a liquid which is not miscible with water;

step d) partially pre-drying the hydrogel particles obtained;

step e) subjecting the partially pre-dried particles to a hydrothermal treatment;

step f) decreasing the cation content of the hydrogel particles thus treated in an aqueous medium to less than 10% by weight, calculated on dry material, and

step g) drying and optionally calcining the silica particles thus obtained.

The silica thus prepared has a very high attrition resistance and a very high mean side crushing strength. A description of this method of preparation is found in European patent application No. 0067459. A suitable way of preparing the catalyst composition comprises incorporating a compound or compounds of a Group 3b and/or Group 4b metal into the silica when the silica is being prepared, for example during step a) or subsequent to step f) and prior to step g). If desired, a portion of the said compound or compounds may be incorporated into the silica during step a) and the balance subsequent to step f) and prior to step g).

The catalyst composition may further be prepared by such conventional techniques as, for example, dry-mixing followed by calcination, co-gellation, co-precipitation, impregnation and ion-exchange. For example, a mixture of a titanium salt and a silica salt may be co-gelled, the material then being dried and ground to an appropriate size or the co-gelled material may be slurried and spray-dried. However, the catalyst composition may, for example, also be prepared by reacting the hydroxyl groups at the surface of a silica with a titanium salt by the procedure described in U.S. patent specification No. 3,166,542, 3,220,959 or 3,274,120, thus producing catalyst compositions in which titanium is in chemical combination with silica. Examples of suitable titanium salts are titanium tetrachloride, titanium oxalate and titanyl sulphate ($TiOSO_4$), the latter dissolved in a mixture comprising sulphuric acid and water. In yet another technique, a fumed pyrogenic catalyst, in particular a pyrogenic titania-silica composition is prepared by combustion of hydrogen and oxygen with a mixture of silicon tetrahalide and titanium halide, "halide" referring to fluoride, chloride bromide or iodide.

Another suitable way of preparing the catalyst composition comprises impregnating silica with a substantially non-aqueous solution of a titanium compound in a non-basic, essentially inert, oxygen-substituted hydrocarbon as a solvent, removing solvent from the impregnated silica and thereafter calcining the impregnated silica, again producing catalyst compositions in which titanium is in chemical combination with silica. A description of this method of preparation is found in British patent specification No 1,332,527.

The catalyst composition may be subjected to a pre-treatment prior to utilization in the process. As a rule it is preferable to do so in order to obtain a higher activity. The pre-treatment suitably consists in heating the catalyst composition in an atmosphere of a non-reducing gas, such as, for example, nitrogen, argon, $CO_2$ or of a free oxygen-containing gas, such as, for example, air. However, the most suitable method of pre-treatment in general also depends upon the form of chemical combination in which the metal compound is provided. In many instances titanium compounds have to be converted into oxide. This

conversion may as a rule suitably be effected by heating in a non-reducing atmosphere, at temperatures in particular in the range of from 250°C to 800°C for periods in the range of from 1 to 18 hours.

The catalyst composition may be used according to the invention in any convenient physical form, for example, as a powder, flakes, spheres or pellets. Very good results have been obtained with spheres.

According to a preferred embodiment the process according to the invention is operated at a temperature above the dew point of sulphur, that is to say above the temperature at which liquid or solid sulphur condenses from the gas at the conditions applied; preferably, temperatures in the range of from 200°C to 350°C are used. This embodiment may, for example, be applied in the catalytic zone or zones of the first or second version of the Claus-type process which have been described hereinbefore; in both cases the $SO_2$ in the $H_2S$-containing gas has been formed in the thermal zone of the Claus-type process.

The process according to the invention may be applied to a gas containing $H_2S$ to which $SO_2$ has been added or to a gas containing $SO_2$ to which $H_2S$ has been added.

According to another preferred embodiment the process according to the invention is operated at a temperature below the dew point of sulphur, liquid or solid sulphur being deposited on the catalyst composition; preferably, temperatures in the range of from 120°C to 149°C are used. This embodiment may be applied to decrease the $H_2S$ and $SO_2$ contents of Claus tail gases by reacting $H_2S$ with $SO_2$ contained therein to produce more sulphur in accordance with reaction (3) and to effectively catalyze reactions (4) and (5). An off-gas containing very little $H_2S$ and $SO_2$ is obtained. This off-gas can usually be incinerated without any objection.

The space velocity to be applied will suitably be in the range of from 250 to 20,000 and usually from 1000 to 10,000 $Nm^3$ gas per $m^3$ catalyst composition per hour. Reaction (3) reaches the equilibrium position and COS and $CS_2$ are almost completely hydrolyzed even when very high space velocities are applied. The $H_2S$ formed by the hydrolysis is subsequently converted into sulphur, thus contributing to an increased sulphur production.

When the conversion of $H_2S$ below the dew point of sulphur drops below a pre-determined level the flow of feed gas is stopped and a regeneration gas is passed at elevated temperature over the sulphur-loaded catalyst to vaporize sulphur therefrom until sufficient sulphur has been recovered and the activity of the catalyst composition is restored. A suitable method of regeneration is found in British patent specification No. 1,307,716. The production of elemental sulphur is resumed after the activity of the catalyst composition is restored.

A very attractive feature of the present invention is that the catalyst composition remains very active in spite of the fact that large amounts of sulphur are deposited on it. For example, depending on the pore volume of the catalyst composition, equilibrium may be reached until more than 90 g of sulphur per 100 g of catalyst composition is deposited. So, the period elapsed between two subsequent regenerations of the catalyst composition is very long. The silica has a pore volume preferably greater than 0.5 and more preferably greater than 1.0 ml/g. The pore volume referred to herein is the total pore volume as measurable by the asborption of liquid water. Silica's having such large pore volumes are also very attractive in view of their low particle density, i.e. the density of a given particle including the volume of the silica skeleton and of the pores.

Silica supports having a predetermined pore volume can be manufactured as described in European patent application No. 0067459. It appears to be especially the amount of water remaining in the partially pre-dried hydrogel subsequent to step d) mentioned hereinbefore, which determines the pore volume.

Another attractive feature of the catalyst composition used in the process according to the invention is that it is insensitive to free oxygen. This contributes to the catalyst composition having a very long life.

The following Examples further illustrate the invention.

Example 1

An amount (bulk volume 250 ml, weight 98 g) of silica gel spheres (pore volume 1.10 ml/g, surface area 300 $m^2/g$) was kept for 15 min under a pressure of 0.02 bar abs. The spheres were then impregnated with tetraisopropylorthotitanate under nitrogen of atmospheric pressure. The impregnated spheres were dried at a temperature of 110°C and the temperature of the dried spheres was increased to 250°C at a rate of 100° C/h and to 500°C at a rate of 50° C/h. The temperature was kept for one hour at 500°C, increased at a rate of 50°C/h to 550°C and kept for 3 h at 550°C. Then, the spheres were allowed to adopt ambient temperature. The catalyst composition thus prepared is referred to as "catalyst composition A"; some properties thereof are stated in Table I.

TABLE I

| Catalyst composition | Atomic ratio Ti/Si | Size of spheres mm | Pore volume ml/g | Surface area $m^2/g$ |
|---|---|---|---|---|
| A | 0.21 | 1.6 | 0.84 | 221 |
| B | 0.10 | 2.5 | 0.77 | 179 |
| C | 0.08 | 5 | 0.58 | 303 |
| D | 0.10 | 5 | 0.55 | 290 |
| | Zr/Si | | | |
| E | 0.05 | 5 | 0.59 | 313 |

A cylindrical tube having an inside diameter of 4.09 cm was charged over a height of 38.1 cm with a fixed bed of catalyst composition A. A gaseous feed composed as shown in Table II was conducted in downflow through the fixed bed at a space velocity of 1000 Nl per 1 catalyst composition per hour. The bed was kept at a temperature of 250°C. Table II presents the results observed for two different feed compositions.

TABLE II

| | Feed | Off-gas | Feed | Off-gas |
|---|---|---|---|---|
| Composition, %v | | | | |
| $H_2S$ | 6.12 | 1.12 | 6.27 | 1.15 |
| $SO_2$ | 2.57 | 0.23 | 2.78 | 0.27 |
| $N_2$ | 61.4 | 58.2 | 49.1 | 46.8 |
| $CO_2$ | 0 | 0 | 12.1 | 11.5 |
| $H_2O$ | 29.9 | 33.2 | 29.7 | 33.1 |
| S | 0 | 7.27 | 0 | 7.21 |
| Total sulphur conversion, % | | 84 | | 84 |

A calculation showed that reaction (3) had reached the thermodynamic equilibrium.

Example 2

Example 1 was modified in that the feed having the left hand composition in Table II contained the small amounts of COS stated in Table III.

TABLE III

| COS content, ppmv | |
|---|---|
| Feed | Off-gas |
| 68 | 30 |
| 186 | 70 |

The results presented in Table III show that even very low COS contents are further reduced.

Example 3

Example 1 was modified in that the feed contained a large amount of COS. Table IV states the compositions of the feed and the off-gas.

TABLE IV

| | Feed | Off-gas |
|---|---|---|
| Composition, %v | | |
| $H_2S$ | 6.20 | 2.53 |
| $SO_2$ | 2.76 | 0.33 |
| $N_2$ | 48.5 | 47.4 |
| $CO_2$ | 12.0 | 12.8 |
| $H_2O$ | 29.4 | 29.8 |
| S | 0 | 7.05 |
| COS | 1.21 | 0.0210 |

Table IV shows that of the large amount of COS 98.1% was converted. A calculation showed that reaction (3) had reached the thermodynamic equilibrium.

Example 4

The experiment of Example 1 was modified by using the gas having the left hand composition stated in Table II at a temperature of 125°C and maintaining this temperature for 3 run hours. Sulphur formed by reaction (3) was deposited on the catalyst composition during these three hours. Then, nitrogen having a temperature of 300°C and a pressure of 1 bar was conducted over the catalyst composition to evaporate the deposited sulphur. It was observed that at the end of said three hours the catalyst composition contained 67% by weight of sulphur, calculated on sulphur-free catalyst composition.

Example 5

The experiment of Example 1 was modified by increasing the space velocity to 2000 Nl per 1 catalyst composition per hour and using a feed containing a moderate amount of COS. Table V states the compositions of the feed and the off-gas.

TABLE V

| | Feed | Off-gas |
|---|---|---|
| Composition, %v | | |
| $H_2S$ | 6.16 | 1.40 |
| $SO_2$ | 3.05 | 0.41 |
| $N_2$ | 49.0 | 46.9 |
| $CO_2$ | 12.0 | 11.6 |
| $H_2O$ | 29.6 | 32.6 |
| S | 0 | 7.00 |
| COS | 0.16 | 0.0100 |

Table V shows that 94% of the COS was converted at a total sulphur conversion of 80%. A calculation showed that reaction (3) had reached the thermodynamic equilibrium.

Example 6

An amount of 21.26 g of $TiO_2$ was added to aqueous sulphuric acid (63.5% by weight), forming 122 ml (220.3 g) of solution. Water (76 ml) was added to this solution. The total amount (198 ml) of solution thus obtained was used for impregnation of silica gel spheres (bulk volume 500 ml, pore volume 0.92 ml/g). The impregnated spheres were dried for 2 hours at a temperature of 120°C, the temperature of the dried spheres was increased to 500°C at a rate of 100°C/h, the temperature was kept for one hour at 500°C and the spheres were allowed to adopt ambient temperature. The catalyst composition thus prepared is referred to as "catalyst composition B"; some properties thereof are stated in Table I.

A cylindrical tube having an inside diameter of 4.09 cm was charged over a height of 38 cm with a fixed bed of catalyst composition B. A gaseous feed composed as shown in Table VI was conducted in downflow

through the fixed bed at a space velocity of 1000 Nl per 1 catalyst composition B per hour. The temperature and the results are stated in Table VII.

TABLE VI

| Composition | % Vol. |
|---|---|
| $H_2S$ | 6.7 |
| $SO_2$ | 3.3 |
| $N_2$ | balance |
| $CO_2$ | 12.1 |
| $H_2O$ | 28 |
| COS | 0.00045—0.00500 |

TABLE VII

| Example | Catalyst composition | Temperature °C | Approach of thermodynamic equilibrium reaction (3),% | COS hydrolysis % |
|---|---|---|---|---|
| 6 | B | 250 | 88 | 75 |
| 7 | B | 300 | 100 | not determined |
| 8 | B | 125 | 85 | ditto |
| 9 | C | 250 | 94 | 91 |
| 10 | D | 250 | 95—100 | 45—67 |
| 11 | E | 250 | 100 | 59 |
| 12 | E | 300 | 100 | 95 |

Example 7

The experiment described in Example 6 was modified in that the bed of catalyst composition B was kept at a temperature of 300°C. The results are presented in Table VII.

Example 8

The experiment described in Example 6 was modified in that the bed of catalyst composition B was kept at a temperature of 125°C for 12 run hours. The results are presented in Table VII. It was observed that at the end of the experiment catalyst composition B contained 88% by weight of sulphur, calculated on sulphur-free catalyst composition.

Example 9

$TiCl_4$ (38.85 g) was added dropwise at a temperature of 4 to 13°C to water (150 ml). An amount (146 ml) of the solution thus obtained was used for impregnation of silica gel spheres (128.4 g, bulk volume 300 ml, pore volume 1.02 ml/g, surface area 249 $m^2/g$). The impregnated spheres were then treated as described for catalyst composition B. The catalyst composition thus prepared is referred to as "catalyst composition C"; some properties thereof are stated in Table I.

The experiment described in Example 6 was modified in that catalyst composition C was used. The results are presented in Table VII.

Example 10

$Na_2TiO_3$ (140 g) was stirred for 10 min with water (100 ml). The precipitate thus formed was filtered off and washed three times with water (30 ml each time). Then, a mixture obtained by adding 7 g of the $TiO_2$ thus obtained and oxalic acid (20 g) to water (150 ml) was stirred, followed by adding oxalic acid (20 g), water (50 ml), oxalic acid (20 g), $TiO_2$ (15 g, prepared as described) and oxalic acid (10 g). In this manner, 350 ml of solution was obtained. This amount was used for impregnation of silica gel spheres (128.4 g, bulk volume 300 ml, the spheres had the same properties as those used for the preparation of catalyst

composition C). The impregnated spheres were further treated as described for catalyst composition B. The impregnation and further treatment were repeated twice. The catalyst composition thus prepared is referred to as "catalyst composition D"; some properties thereof are stated in Table I.

The experiment described in Example 6 was modified in that catalyst composition D was used. The results are presented in Table VII.

Example 11

An amount (90.7 g, bulk volume 200 ml) of silica spheres having the same properties as those used for the preparation of catalyst composition C was impregnated with 92.5 ml of an aqueous solution of zirconium acetate containing 7.2 g of this salt. The impregnated spheres were further treated as described for catalyst composition B. The catalyst composition thus prepared is referred to as "catalyst composition E"; some properties thereof are stated in Table I.

The experiment described in Example 6 was modified in that catalyst composition E was used. The results are presented in Table VII.

Example 12

The experiment described in Example 11 was modified in that a temperature of 300°C was used. The results are presented in Table VII.

Comparative experiment

The experiment described in Example 7 was modified in that the bed of catalyst composition B was replaced with silica spheres having the same properties as those used for the preparation of catalyst composition B.

Reaction (3) had reached only 36% of the thermodynamic equilibrium and COS hydrolysis was less than 10%.

**Claims**

1. A process for the production of elemental sulphur from a gas containing hydrogen sulphide and sulphur dioxide, which process comprises contacting the said gas with a catalyst composition comprising at least one metal from Group 3b and/or Group 4b of the Periodic Table of the Elements on a silica-containing carrier.

2. A process as claimed in claim 1, in which the said metal or metals is (are) applied as oxide or sulphate thereof.

3. A process as claimed in claim 2, in which at least one oxide of titanium, zirconium and/or thorium is applied on the carrier.

4. A process as claimed in any one of the preceding claims, in which the said metal or metals is (are) applied in the catalyst composition in an atomic ratio of metal or metals to silicon in the range of from 0.001 to 1.0.

5. A process as claimed in claim 4, in which the atomic ratio being applied is in the range of from 0.03 to 0.3.

6. A process as claimed in any one of the preceding claims, in which at least 75% by weight of silica is applied in the carrier.

7. A process as claimed in claim 6, in which at least 90% by weight of silica is applied in the carrier.

8. A process as claimed in any one of the preceding claims, in which the silica has been prepared by the following process steps:—

step a) preparing a silica hydrosol by mixing an aqueous solution of an alkali metal silicate with an aqueous solution of an acid;

step b) converting the hydrosol into droplet form;

step c) shaping the droplets in air or in a liquid which is not miscible with water;

step d) partially pre-drying the hydrogel particles obtained;

step e) subjecting the partially pre-dried particles to a hydrothermal treatment;

step f) decreasing the cation content of the hydrogel particles thus treated in an aqueous medium to less than 10% by weight, calculated on dry material, and

step g) drying and optionally calcining the silica particles thus obtained.

9. A process as claimed in any one of the preceding claims, in which a pore volume of the silica which is greater than 0.5 ml/g is used.

10. A process as claimed in claim 9, in which the pore volume being used is greater than 1.0 ml/g.

11. A process as claimed in any one of the preceding claims, which is operated at a temperature above the dew point of sulphur.

12. A process as claimed in claim 11, which is operated at a temperature in the range of from 200°C to 350°C.

13. A process as claimed in claim 11 or 12, in which the sulphur dioxide in the gas containing hydrogen sulphide and sulphur dioxide has been formed in the thermal zone of a Claus-type process, as hereinbefore defined.

14. A process as claimed in any one of claims 1 to 10, which is operated at a temperature below the dew point of sulphur.

15. A process as claimed in claim 14, which is operated at a temperature in the range of from 120°C to 149°C.

16. A process as claimed in claim 14 or 15, in which the gas containing hydrogen sulphide and sulphur dioxide is a Claus tail gas, as hereinbefore defined.

17. A process as claimed in any one of claims 14 to 16, in which the contact of the gas containing hydrogen sulphide and sulphur dioxide with the catalyst composition is interrupted, a regeneration gas is passed at elevated temperature over the sulphur-loaded catalyst composition to vaporize sulphur therefrom and the contact of the gas containing hydrogen sulphide and sulphur dioxide with the catalyst composition is subsequently resumed.

**Patentansprüche**

1. Ein Verfahren zur Gewinnung von elementarem Schwefel aus einem Gas, enthaltend Schwefelwasserstoff und Schwefeldioxid, welches Verfahren das Kontaktieren des genannten Gases mit einer Katalysatorzusammensetzung, enthaltend mindestens ein Metall der Gruppe 3b und/oder 4b des Periodischen Systems der Elemente auf einem Siliciumdioxid enthaltenden Träger, Umfaßt.

2. Ein Verfahren wie in Anspruch 1 beansprucht, in welchem das genannten Metall oder die Metalle als Oxid oder Sulfat desselben aufgetragen ist(sind).

3. Ein Verfahren wie in Anspruch 2 beansprucht, in welchem mindestens ein Oxid von Titan, Zirkonium und/oder Thorium auf den Träger aufgetragen ist.

4. Ein Verfahren wie in einem der vorstehenden Ansprüche beansprucht, in welchem das genannte Metall oder die Metalle in der Katalysatorzusammensetzung in einem Atomverhältnis von dem Metall oder den Metallen zu Silicium im Bereich von 0,001 bis 1,0 verwendet wird(werden).

5. Ein Verfahren wie in Anspruch 4 beansprucht, in welchem das angewendete Atomverhältnis im Bereich von 0,03 bis 0,3 liegt.

6. Ein Verfahren wie in einem der vorstehenden Ansprüche beansprucht, in welchem mindestens 75 Gewichtsprozent Siliciumdioxid im Träger vorliegen.

7. Ein Verfahren wie in Anspruch 6 beansprucht, in welchem mindestens 90 Gewichtsprozent Siliciumdioxid im Träger vorliegen.

8. Ein Verfahren wie in einem der vorstehenden Ansprüche beansprucht, in welchem das Siliciumdioxid durch die folgenden Verfahrensstufen hergestellt worden ist:

Stufe a) Herstellung eines Siliciumdioxidhydrosols durch Vermischen einer wäßrigen Lösung eines Alkalimetallsilikats mit einer wäßrigen Lösung einer Säure;

Stufe b) Umwandlung des Hydrosols in Tröpfchenform;

Stufe c) Formen der Tröpfchen in Luft oder in einer flüssigkeit, welche mit Wasser nicht mischbar ist;

Stufe d) teilweises Vortrockenen der erhaltenen Hydrogelteilchen;

Stufe e) Hydrothermische Behandlung der teilweise vorgetrockneten Teilchen;

Stufe f) Verminderung des Kationenanteils der so behandelten Hydrogelteilchen in einem wäßrigen Medium auf weniger als 10 Gewichtsprozent, bezogen auf das trockene Material, und

Stufe g) Trocknen und gegebenefalls Kalzinieren der so erhaltenen Siliciumdioxid-Teilchen.

9. Ein Verfahren wie in einem der vorstehenden Ansprüche beansprucht, in welchem ein Porenvolumen des Silicumdioxids, welches größer als 0,5 ml/g ist, verwendet wird.

10. Ein Verfahren wie in Anspruch 9 beansprucht, in welchem das Verwendete Porenvolumen größer als 1,0 ml/g ist.

11. Ein Verfahren wie in einem der vorstehenden Ansprüche beansprucht, welches bei Temperaturen über dem Taupunkt von Schwefel durchgeführt wird.

12. Ein Verfahren wie in Anspruch 11 beansprucht, welches bei einer Temperatur im Bereich von 200°C bis 350°C durchgeführt wird.

13. Ein Verfahren wie in Anspruch 11 oder 12 beansprucht, in welchem das Schwefeldioxid in dem Gas, enthaltend Schwefelwasserstoff und Schwefeldioxid, in der Thermalzone eines Verfahrens vom Claus-Typ, wie oben beschrieben, gebildet wurde.

14. Ein Verfahren wie in einem der Ansprüche 1 bis 10 beansprucht, welches bei einer Temperatur unter dem Taupunkt von Schwefel durchgeführt wird.

15. Ein Verfahren wie in Anspruch 14 beansprucht, welches bei einer Temperatur im Bereich von 120°C bis 149°C durchgeführt wird.

16. Ein Verfahren wie in Anspruch 14 oder 15 beansprucht, in welchem das Gas enthaltend Schwefelwasserstoff und Schwefeldioxid, ein Claus-Abgas, wie oben definiert, ist.

17. Ein Verfahren wie in einem der Ansprüche 14 bis 16 beansprucht, in welchem der Kontakt des Gases, enthaltend Schwefelwasserstoff und Schwefeldioxid, mit der Katalysatorzusammensetzung unterbrochen wird, ein Regenerationsgas bei erhöhten Temperaturen über die mit Schwefel beladene Katalysator-Zusammensetzung geleitet wird, um Schwefel daraus zu verdampfen, und daraufhin der Kontakt des Gases, enthaltend Schwefelwasserstoff und Schwefeldioxid, mit der Katalysatorzusammensetzung wiederhergestellt wird.

**Revendications**

1. Procédé de production de soufre élémentaire à partir d'un gaz contenant de l'acide sulfhydrique et de l'anhydride sulfureux, procédé dans lequel on met en contact ledit gaz avec une composition catalyseur comprenant au moins un métal du groupe 3b et/ou du groupe 4b de la classification périodique des éléments sur un support contenant de la silice.

2. Procédé selon la revendication 1, dans lequel le(s)dit(s) métal(métaux) est(sont) appliqué(s) sous la forme de son(leur) oxyde ou sulfate.

3. Procédé selon la revendication 2, dans lequel au moins un oxyde de titane, zirconium et/ou thorium est appliqué sur le support.

4. Procédé selon l'une quelconque des revendications précédentes, dans lequel ledit métal ou lesdits métaux est(sont) appliqué(s) dans la composition catalyseur dans un rapport atomique du métal ou des métaux au silicium situé dans un intervalle allant de 0,001 à 1,0.

5. Procédé selon la revendication 4, dans lequel le rapport atomique appliqué est situé dans un intervalle allant de 0,03 à 0,3.

6. Procédé selon l'une quelconque des revendications précédentes, dans lequel on applique au moins 75% en poids de silice dans le support.

7. Procédé selon la revendication 6, dans lequel on applique au moins 90% en poids de silice dans le support.

8. Procédé selon l'une quelconque des revendications précédentes, dans lequel la silice a été préparée par les étapes de procédé suivantes:

Etape a) Préparation d'un hydrosol de silice en mélangeant une solution aqueuse d'un silicate de métal alcalin avec une solution aqueuse d'un acide;

Etape b) Transformation de l'hydrosol en forme de gouttelettes;

Etape c) Mise en forme des gouttelettes dans l'air ou dans un liquide qui n'est pas miscible à l'eau;

Etape d) Pré-séchage partiel des particules d'hydrogel obtenues;

Etape e) Soumission des particules partiellement préséchées à un traitement hydrothermique;

Etape f) Diminution de la teneur en cations des particules d'hydrogel ainsi traitées dans un milieu aqueux à moins de 10% en poids, calculés sur la base de la matière sèche, et

Etape g) Séchage et éventuellement calcination des particules de silice ainsi obtenues.

9. Procédé selon l'une quelconque des revendications précédentes, dans lequel on utilise un volume de pores de la silice qui est supérieur à 0,5 ml/g.

10. Procédé selon la revendication 9, dans lequel le volume de pores utilisé est supérieur à 1,0 ml/g.

11. Procédé selon l'une quelconque des revendications précédentes, que l'on conduit à une température supérieure au point de rosée du soufre.

12. Procédé selon la revendication 11, que l'on conduit à une température située dans un intervalle allant de 200°C à 350°C.

13. Procédé selon les revendications 11 ou 12, dans lequel l'anhydride sulfureux dans le gaz contenant de l'acide sulfhydrique et de l'anhydride sulfureux a été formé dans la zone thermique d'un procédé de type Claus, tel que défini ci-dessus.

14. Procédé selon l'une quelconque des revendications 1 à 10, que l'on conduit à une température inférieure au point de rosée du soufre.

15. Procédé selon la revendication 14, que l'on conduit à une température située dans un intervalle allant de 120°C à 149°C.

16. Procédé selon l'une des revendications 14 ou 15, dans lequel le gaz contenant de l'acide sulfhydrique et de l'anhydride sulfureux est un gaz de queue de Claus, tel que défini ci-dessus.

17. Procédé selon l'une quelconque des revendications 14 à 16, dans lequel le contact du gaz contenant de l'acide sulfhydrique et de l'anhydride sulfureux acec la composition catalyseur est interrompu, on fait passer un gaz de régénération à une température élevée au-dessus de la composition catalyseur chargée en soufre pour vaporiser le soufre à partir de celle-ci et l'on rétablit ultérieurement le contact du gaz contenant de l'acide sulfhydrique et de l'anhydride sulfureux avec la composition catalyseur.